# EUROPEAN PATENT APPLICATION

(11) **EP 4 640 648 A1**
(43) Date of publication of application: **29.10.2025**
(21) Application number: 23906894.3
(22) Date of filing: 14.12.2023
(51) Int. Cl.: C03C 27/12, B60J 1/00, B60J 1/02

(54) **LAMINATED GLASS**

(30) Priority: 20.12.2022 JP 2022203626
(71) Applicant: AGC INC., Chiyoda-ku, Tokyo 1008405 (JP); AGC Glass Europe, 1348 Louvain-La-Neuve (BE)
(72) Inventor: MITSUTAKE, Hideo, Tokyo 100-8405 (JP); AOKI, Tokihiko, Tokyo 100-8405 (JP); BESSE, Gregoire, 1348 Louvain-la-Neuve (BE); LALOYAUX, Xavier, 1348 Louvain-la-Neuve (BE); AYOUB, Patrick, 1348 Louvain-la-Neuve (BE)
(74) Representative: TBK
(86) International application number: PCT/JP2023/044856
(87) International publication number: WO 2024/135529

(57) **Abstract**

This laminated glass comprises: a first glass plate having a first surface and a second surface; a second glass plate having a third surface and a fourth surface; and an Interlayer sandwiched between the second surface of the first glass plate and the third surface of the second glass plate. The fourth surface has a light shielding portion and an opening portion, wherein the difference between visible light transmittances of the light shielding portion and the opening portion is 70% or more.

## Description

### TECHNICAL FIELD

The present invention relates to a laminated glass.

### BACKGROUND ART

A laminated glass with a film enclosed is known. By irradiating the film of the laminated glass with light from a projection device, the reflected light from the film can be visible as an image. With this laminated glass, when the projection device is not irradiating the film with light, scenery outside a vehicle can be visible through the laminated glass.

### CITATION LIST

### PATENT DOCUMENT

Patent Document 1: Japanese Patent No. 6508205

### SUMMARY OF INVENTION

### TECHNICAL PROBLEM

When such a laminated glass is mounted on a vehicle, regulations may require the use of a film with a certain level of visible light transmittance or higher. However, when a film with high visible light transmittance is used, if there is external light such as sunlight, the external light is transmitted through the film and is also scattered by the film, which reduces a contrast ratio between a projected image and the external light, reducing visibility of the image emitted from the projection device and projected onto the film.

The present invention has been made in consideration of the above points, and an object thereof is, in a laminated glass that enables light emitted from a projection device to be visible as an image, to improve visibility of the image when there is external light.

### SOLUTION TO PROBLEM

A laminated glass according to one embodiment of the disclosure is a laminated glass including a first glass plate having a first surface and a second surface, a second glass plate having a third surface and a fourth surface, and an Interlayer sandwiched between the second surface of the first glass plate and the third surface of the second glass plate, wherein the fourth surface includes a light shielding portion and an opening portion, and a difference in visible light transmittance between the light shielding portion and the opening portion is 70% or more.

### ADVANTAGEOUS EFFECTS OF INVENTION

According to one embodiment of the disclosure, in laminated glass that enables light emitted from a projection device to be visible as an image, visibility of the image can be improved when there is external light.

### BRIEF DESCRIPTION OF DRAWINGS

[FIG. 1] A diagram illustrating a laminated glass according to a first embodiment.
[FIG. 2] A plan view describing a light shielding portion.
[FIG. 3] A partial plan view illustrating a laminated glass according to Modified Example 1.
[FIG. 4] A partial cross-sectional view illustrating a laminated glass according to Modified Example 2.
[FIG. 5] A diagram illustrating a laminated glass according to Modified Example 3.
[FIG. 6] A diagram (part 1) describing evaluation results.
[FIG. 7] A diagram (part 2) describing the evaluation results.
[FIG. 8] A diagram (part 3) describing the evaluation results.
[FIG. 9] A diagram (part 4) describing the evaluation results.
[FIG. 10] A diagram (part 5) describing the evaluation results.
[FIG. 11] A diagram (part 6) describing the evaluation results.

### DESCRIPTION OF EMBODIMENTS

Aspects for implementing the invention will be described below with reference to the drawings. In each drawing, the same constituent parts may be denoted by the same reference signs, and repeated description thereof may be omitted. Also, in each drawing, sizes and shapes may be partially exaggerated to make contents of the present invention easier to understand.

In the present application, it is assumed that a vehicle is typically an automobile, but indicates a mobile object including a train, a ship, an aircraft, or the like, on which a laminated glass can be mounted.

Also, a plan view indicates viewing an object from a normal direction of a fourth surface (a surface on an inner side of a vehicle) that passes through a center of gravity of a laminated glass, and a shape seen in that case is referred to as a planar shape.

In addition, the notations "upper" and "lower" indicates upper and lower when a laminated glass is attached to a vehicle.

Further, an outermost edge of a predetermined member is referred to as a "periphery," and in the predetermined member, a region having a width inscribed in the "periphery" is referred to as a "peripheral portion."

### <First embodiment>

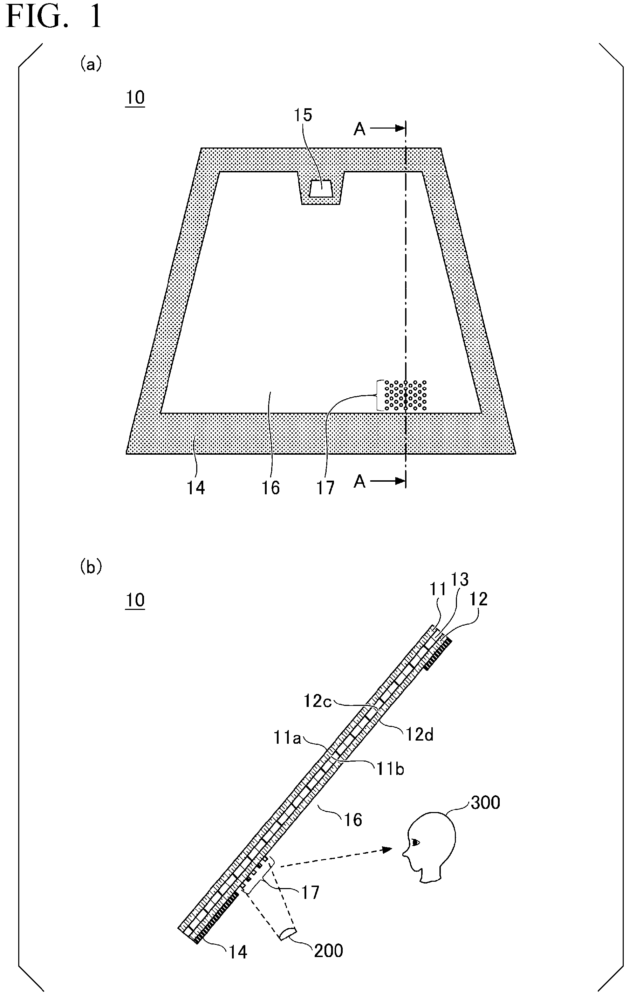

[Laminated glass] FIG. 1 is a diagram illustrating a laminated glass according to a first embodiment. In detail, FIG. 1(a) is a plan view schematically showing the laminated glass when viewed from inside a vehicle to the outside, and FIG. 1(b) is a cross-sectional view along line A-A in FIG. 1(a).

As shown in FIG. 1(b), a laminated glass 10 is a laminated glass for a vehicle, which includes a first glass plate 11, a second glass plate 12, an Interlayer 13, and a shielding layer 14. The laminated glass 10 can be applied to, for example, a windshield of the vehicle. Also, the shielding layer 14 is provided if needed.

The first glass plate 11 is an exterior glass plate located an exterior side (first side) of the vehicle when the laminated glass 10 is attached to the vehicle. The first glass plate 11 has a first surface 11a and a second surface 11b. The second glass plate 12 is an interior glass plate located an interior side (second side) of the vehicle when the laminated glass 10 is attached to the vehicle. The second glass plate 12 has a third surface 12c and a fourth surface 12d.

The Interlayer 13 is a film that bonds the first glass plate 11 and the second glass plate 12. The Interlayer 13 is sandwiched between the second surface 11b of the first glass plate 11 and the third surface 12c of the second glass plate 12. That is, one surface of the Interlayer 13 is in contact with the second surface 11b of the first glass plate 11, and the other surface of the Interlayer 13 is in contact with the third surface 12c of the second glass plate 12.

An outer peripheral side surface of the Interlayer 13 is preferably edge-treated. That is, the outer peripheral side surface of the Interlayer 13 is preferably treated so that it does not protrude significantly from outer peripheral side surfaces of the first glass plate 11 and the second glass plate 12. An amount of protrusion of the outer peripheral side surface of the Interlayer 13 from the outer peripheral side surfaces of the first glass plate 11 and the second glass plate 12 is preferably 150 µm or less, which does not impair an exterior shape thereof. Details of the first glass plate 11, the second glass plate 12, and the Interlayer 13 will be described later.

As shown in FIG. 1(a), the shielding layer 14 is an opaque layer, and is provided, for example, in a strip shape along a peripheral portion of the laminated glass 10. The shielding layer 14 is, for example, an opaque colored ceramic layer, and its color may be any color, but a dark color such as black, brown, gray, or dark blue is preferable, and black is more preferable. The shielding layer 14 may be a colored Interlayer or colored film with light shielding properties, a combination of a colored Interlayer and a colored ceramic layer, or a layer having a light-adjusting function. The colored film may be integrated with an infrared rays reflective film or the like.

A width of the shielding layer 14 in a plan view is, for example, about 10 mm to 250 mm, preferably 20 mm to 220 mm, and more preferably 30 mm to 200 mm. The presence of the opaque shielding layer 14 in the laminated glass 10 can inhibit deterioration of an adhesive (for example, a urethane adhesive) that holds the peripheral portion of the laminated glass 10 to a vehicle body due to ultraviolet rays.

In the example of FIG. 1(b), the shielding layer 14 is provided only on a peripheral portion of the fourth surface 12d of the second glass plate 12. However, the present invention is not limited thereto. The shielding layer 14 may be provided only on a peripheral portion of the second surface 11b of the first glass plate 11, or may be provided on both the peripheral portion of the fourth surface 12d of the second glass plate 12 and the peripheral portion of the second surface 11b of the first glass plate 11.

As shown in FIG. 1(a), an information transmission and reception region 15 surrounded by the shielding layer 14 may be provided if needed. The information transmission and reception region 15 is region through which a device such as a camera mounted on the vehicle transmits and/or receives information. A planar shape of the information transmission and reception region 15 is not particularly limited, and may be, for example, an isosceles trapezoid. The information transmission and reception region 15 may be provided, for example, in the vicinity of an upper side of the laminated glass 10, which is advantageous for transmitting and/or receiving information while not obstructing a driver's field of vision when the laminated glass 10 is attached to the vehicle.

The laminated glass 10 has, for example, a complex curved shape that is curved in both vertical and horizontal directions when it is attached to the vehicle. However, the complex curved shape is not limited to a shape that is curved in the vertical and horizontal directions when attached to the vehicle, and includes a shape that is curved in any two or more different directions. Alternatively, the laminated glass 10 may have a single curved shape that is curved only in the vertical or horizontal direction when it is attached to the vehicle. However, the single curved shape is not limited to a shape that is curved only in the vertical or horizontal direction when attached to the vehicle, and includes a shape that is curved in any one direction only.

The laminated glass 10 is preferably curved to be convex toward the outside of the vehicle. That is, the first glass plate 11 is preferably curved to be convex toward a side opposite to the Interlayer 13, and the second glass plate 12 is preferably curved to be convex toward the Interlayer 13 side. Also, in FIG. 1(a), the laminated glass 10 is trapezoidal in a plan view, but the laminated glass 10 is not limited to a trapezoidal shape and may have any shape including a rectangular shape.

The minimum value of a radius of curvature of the laminated glass 10 is preferably 500 mm or more and 100,000 mm or less. Radii of curvature of the first glass plate 11 and the second glass plate 12 may be the same or different from each other. If the radii of curvature of the first glass plate 11 and the second glass plate 12 are different from each other, the radius of curvature of the second glass plate 12 is preferably smaller than the radius of curvature of the first glass plate 11.

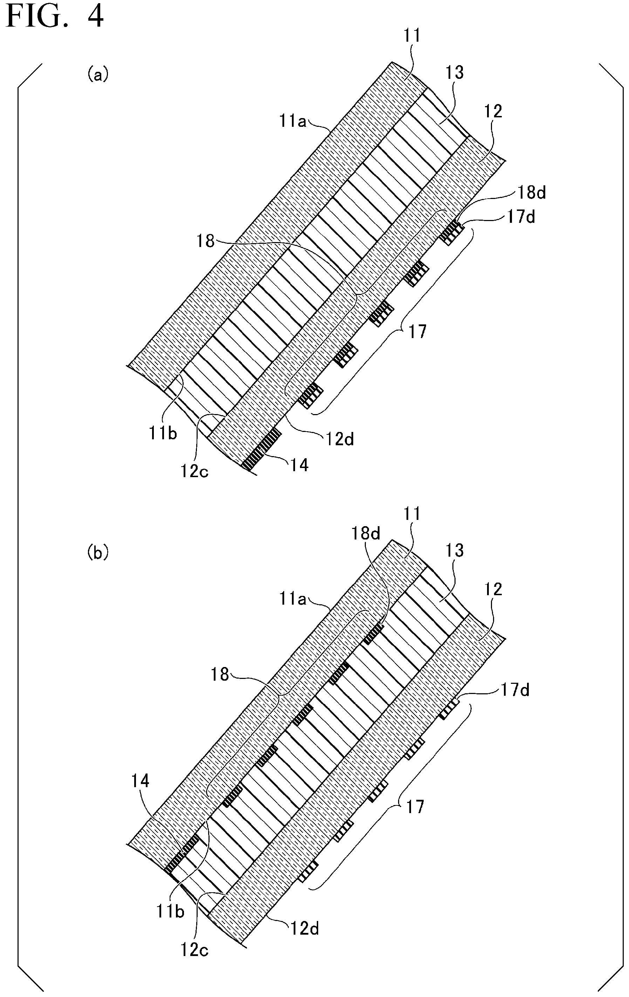

In the laminated glass 10, the fourth surface 12d of the second glass plate 12 includes an opening portion 16 and a light shielding portion 17. Here, the fact that the fourth surface 12d of the second glass plate 12 includes the light shielding portion 17 includes a case in which the light shielding portion 17 is provided directly on the fourth surface 12d as shown in FIG. 1(b), and a case in which the light shielding portion 17 is provided on the fourth surface 12d via a low brightness portion 18 as shown in FIG. 4(a) and the like, which will be described later.

The opening portion 16 is a region surrounded by the shielding layer 14 in FIG. 1(a), in which the laminated glass 10 has a visible light transmittance of 70% or more. The shielding layer 14 has a visible light transmittance of 5% or less, for example. The visible light transmittance can be measured by a method conforming to JIS R3212. Also, the information transmission and reception region 15 is not included in the opening portion 16. That is, the visible light transmittance of the information transmission and reception region 15 may be less than 70%.

As shown in FIG. 1(a), the light shielding portion 17 is provided in a part of the region surrounded by the shielding layer 14. As shown in FIG. 1(b), by irradiating light onto the light shielding portion 17 from a projection device 200 disposed on the second glass plate 12 side, the driver 300 or the like can visually recognize the light reflected and/or scattered by the light shielding portion 17 as an image. The light shielding portion 17 reflects and/or scatters the light from the projection device 200 and the like. Also, the projection device 200 is not a constituent element of the laminated glass 10.

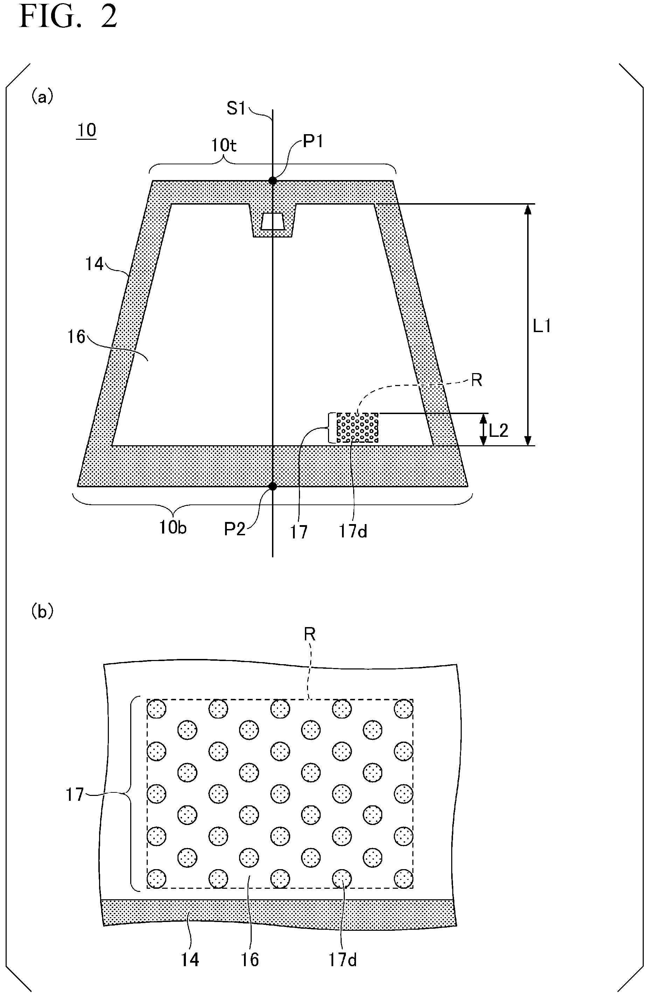

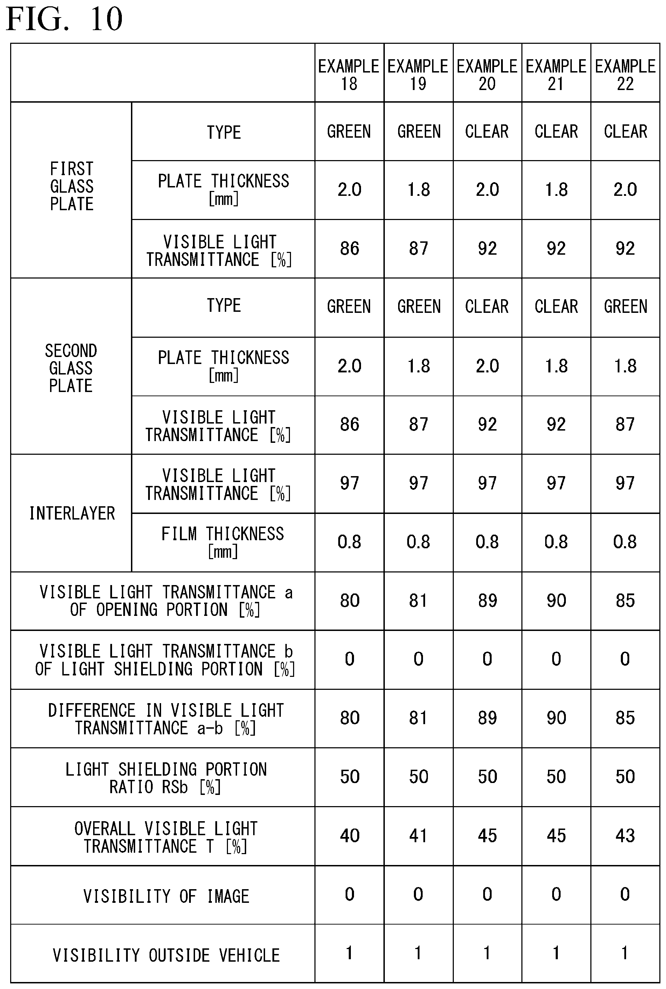

FIG. 2 is a plan view describing the light shielding portion. In detail, FIG. 2(a) is a plan view schematically showing the laminated glass when viewed from inside the vehicle to the outside, and FIG. 2(b) is an enlarged plan view of the light shielding portion in FIG. 2(a) and its vicinity. In FIG. 2(a), 10t indicates an upper side of the laminated glass 10 in a plan view, and 10b indicates a lower side of the laminated glass 10 in a plan view. In addition, a straight line S1 indicates a straight line passing through a point P1 that bisects the upper side 10t of the laminated glass 10 and a point P2 that bisects the lower side 10b in a plan view.

As shown in FIGS. 2(a) and 2(b), the light shielding portion 17 is configured of, for example, a dot pattern in which a plurality of first dots 17d are disposed apart from one another. That is, the light shielding portion 17 is a collection of the plurality of first dots 17d. The areas between adjacent first dots 17d are the opening portion 16, not the light shielding portion 17. Since the light shielding portion 17 is configured of the dot pattern, the light irradiated to the first dots 17d can be visible as an image, and the scenery or the like outside the vehicle can be visible through the opening portion 16 located between the adjacent first dots 17d from the fourth surface 12d side through the laminated glass 10.

In the example of FIGS. 2(a) and 2(b), shapes of each of the first dots 17d are circular. However, the shapes of each of the first dots 17d are not limited to circles, and may be any shape, such as an ellipse, a rectangle, or a polygon. Areas of each of the first dots 17d are, for example, 0.007 mm² or more and 0.8 mm² or less, and more preferably 0.02 mm² or more and 0.5 mm² or less. If the shapes of each of the first dots 17d are circular, diameters of each of the first dots 17d are, for example, 100 µm or more and 1,000 µm or less, more preferably 160 µm or more and 800 µm or less. If the areas of each of the first dots 17d are 0.007 mm² or more, the light emitted from the projection device can be sufficiently reflected and/or scattered by each of the first dots 17d. If the areas of each of the first dots 17d are 0.8 mm² or less, each of the first dots 17d is less noticeable when the scenery outside the vehicle is viewed through the laminated glass 10 from the fourth surface 12d side.

The number of the first dots 17d is not limited to the example shown in FIGS. 2(a) and 2(b). Also, the first dots 17d of different sizes and shapes may be mixed in one row. For example, the first dots 17d of two different sizes may be disposed alternately in one row.

For example, the first dots 17d may be disposed in a plurality of rows parallel to the lower side 10b of the laminated glass 10 in a plan view. For example, the first dots 17d may be disposed in a staggered manner, in a matrix, or in other manners. FIG. 2(a) and FIG. 2(b) show an example in which the first dots 17d are disposed in a staggered manner.

The light shielding portion 17 preferably has a high brightness. The light shielding portion 17 preferably has a brightness L* value of 50 or more, more preferably 60 or more, and even more preferably 70 or more. By increasing the brightness of the light shielding portion 17, the light emitted from the projection device is easily reflected and/or scattered. For that reason, visibility of the image of the light emitted from the projection device can be improved.

**In** the present application, brightness indicates a brightness L* value in L*a*b* color system defined in JIS Z 8781-4. A range of the brightness L* is 0 or more and 100 or less, and it becomes darker toward 0 and whiter toward 100.

The light shielding portion 17 can be formed, for example, using an ink that is close to white. By forming the light shielding portion 17 with ink, a formation position of the light shielding portion 17 can be easily changed. The ink that forms the light shielding portion 17 may be either inorganic or organic, but if organic ink is used, a surface roughness of the light shielding portion 17 can be reduced, and thus the light emitted from the projection device can be uniformly reflected. That is, if the ink that forms the light shielding portion 17 is organic ink, visibility of the image can be improved.

In FIGS. 2(a) and 2(b), R indicates a light irradiation region irradiated with light from the projection device 200 shown in FIG. 1(b). Here, the light irradiation region R is defined as a range in which a circumscribing triangle or rectangle can be drawn around the light shielding portion 17 in a plan view. However, the region in which a gradation is formed, which will be described later, is not included in the light irradiation region R. The light irradiation region R is configured of the light shielding portion 17, which is the collection of the first dots 17d, and the opening portion 16 located around each of the first dots 17d. In the example of FIGS. 2(a) and 2(b), the light irradiation region R is a range in which a circumscribing rectangle with sides parallel to the straight line S1 can be drawn around the light shielding portion 17 in a plan view.

In a direction parallel to the straight line S1, the maximum length of the opening portion 16 is defined as L1, and a length from an end portion of the opening portion 16 on the lower side 10b side to an end portion of the light shielding portion 17 on the upper side 10t side (that is, a length to an end portion of the light irradiation region R on the upper side 10t side) is defined as L2. In this case, the length L2 is preferably 1/3 or less of the length L1, and the length L2 is more preferably 1/4 or less of the length L1. By disposing the light irradiation region R within such a range, the risk that the light shielding portion 17 in the light irradiation region R will obstruct the driver's field of vision can be reduced.

In the light irradiation region R, a difference in visible light transmittance between the light shielding portion 17 and the opening portion 16 is 70% or more. This makes it possible to inhibit transmittance of external light such as sunlight through the light shielding portion 17 or scattering thereof at the light shielding portion 17. On the other hand, the light emitted from the projection device is well reflected and/or scattered at the light shielding portion 17. For that reason, as compared to a laminated glass in the related art in which a film is enclosed, visibility of the image when there is external light can be improved. As a result, it is also possible to reduce the brightness of the projection device. In the light irradiation region R, the difference in visible light transmittance between the light shielding portion 17 and the opening portion 16 is preferably 75% or more, and more preferably 80% or more. This makes it possible to further improve visibility of the image when there is external light. As a result, it is also possible to further reduce the brightness of the projection device. Also, in the present application, the case in which there is external light indicates a case in which a vehicle exterior illuminance is 3,000 lx or more.

When the visible light transmittance of the opening portion 16 is defined as a, the visible light transmittance of the light shielding portion 17 is defined as b, and a light shielding portion ratio is defined as RSb, an overall visible light transmittance T of the light irradiation region R is calculated as T=a×(100-RSb)+b×RSb. Here, the light shielding portion ratio is a ratio of an area of the light shielding portion 17 to the total area of the opening portion 16 and the light shielding portion 17 located in the light irradiation region R in a plan view.

Since the light shielding portion 17 is configured of a dot pattern, the light shielding portion ratio can be easily changed by changing a density of the first dots 17d. As a result, the overall visible light transmittance T of the light irradiation region R can be easily adjusted in accordance with regulations. For example, the overall visible light transmittance T of the light irradiation region R can be set to 70% or more. Also, in the laminated glass in the related art in which a film is enclosed, it is difficult to change the visible light transmittance.

The visible light transmittance of the opening portion 16 is preferably high. Thus, for example, the overall visible light transmittance T of the light irradiation region R can be set to 70% or more while the light shielding portion ratio can be increased. As a result, visibility of the image of the light emitted from the projection device can be improved. That is, even if external light is strong, the light emitted from the projection device can be visible as an image. The visible light transmittance of the opening portion 16 is preferably 75% or more, more preferably 80% or more, and even more preferably 85% or more.

Also, the visible light transmittance of the first glass plate 11 and/or the second glass plate 12 is preferably 80% or more, and more preferably 90% or more. By increasing the visible light transmittance of the first glass plate 11 and/or the second glass plate 12, the visible light transmittance of the opening portion 16 can be increased. As a result, as described above, the light shielding portion ratio can be increased, and visibility of the image of the light emitted from the projection device can be improved.

For example, when clear glass is used for the first glass plate 11 and/or the second glass plate 12, the visible light transmittance of the opening portion 16 can be increased and the light shielding portion ratio can be increased more than when green glass is used. Here, green glass is a glass with high transparency. The visible light transmittance of green glass is, for example, about 83% to 88% when a plate thickness is 1.6 mm to 2.0 mm. On the other hand, clear glass is a glass with even higher transparency than green glass, and the visible light transmittance is, for example, about 88% to 92% when a plate thickness is 1.8 mm to 2.0 mm.

A plate thickness of the second glass plate 12 is preferably 2.0 mm or less, and more preferably 1.8 mm or less. By reducing the plate thickness of the second glass plate 12, the visible light transmittance can be improved and a secondary image can be made less noticeable. The secondary image referred to here is a double image caused by the light reflected by the third surface 12c of the second glass plate 12 and the light reflected and/or scattered by the light shielding portion 17.

The light shielding portion ratio is preferably 13% to 50%. If the light shielding portion ratio is 13% or more, the image can be visible when the vehicle exterior illuminance is 3,000 lx or more and less than 20,000 lx. Also, if the light shielding portion ratio is 50% or less, the scenery outside the vehicle can be visible through the light irradiation region R when no light is being emitted from the projection device.

The light shielding portion ratio is preferably 18% or more. If the light shielding portion ratio is 18% or more, the image can be visible even if the vehicle exterior illuminance is 20,000 lx or more. Moreover, the light shielding portion ratio is preferably 30% or less. If the light shielding portion ratio is 30% or less, the scenery outside the vehicle can be visible through the light irradiation region R even if light is being emitted from the projection device.

Here, the first glass plate 11, the second glass plate 12, and the Interlayer 13 will be described in detail.

[Glass Plates] The first glass plate 11 and the second glass plate 12 may be inorganic glass or organic glass. As the inorganic glass, for example, soda-lime glass, aluminosilicate glass, borosilicate glass, alkali-free glass, quartz glass, or the like can be used without any particular limitation. The first glass plate 11 located outside the laminated glass 10 is preferably made of inorganic glass from the viewpoint of scratch resistance, and is preferably made of soda-lime glass from the viewpoint of formability. If the first glass plate 11 and the second glass plate 12 are made of soda-lime glass, clear glass, green glass containing a predetermined amount or more of iron components, or dark green glass can be appropriately used.

The inorganic glass may be either unreinforced glass or tempered glass. Unreinforced glass is formed by molten glass into a flat plate and slowly cooling it. Tempered glass is formed by forming a compressive stress layer on a surface of unreinforced glass. Also, in the case of tempered glass, residual stress can be reduced by distributing the stress isotropically.

The tempered glass may be either physically tempered glass, such as air-cooled tempered glass, or chemically tempered glass. In the case of physically tempered glass, its glass surface can be tempered by, for example, in bending, performing an operation other than slow cooling, such as rapidly cooling a uniformly heated glass plate from a temperature near its softening point, thereby generating a compressive stress layer on the glass surface due to a difference in temperature between the glass surface and its inside.

In the case of chemically tempered glass, for example, after bending, by generating a compressive stress on the glass surface using ion exchange or the like, the glass surface can be tempered. Also, glass that absorbs ultraviolet or infrared rays may be used, and although transparent glass is preferable, a glass plate that is colored to the extent that transparency is not impaired may be used.

On the other hand, examples of materials for organic glass include polycarbonate, acrylic resins such as polymethyl methacrylate, polyvinyl chloride, polystyrene, and other transparent resins.

The first glass plate 11 and the second glass plate 12 are not limited to be trapezoidal or rectangular, and may be processed into various shapes and curvatures. The bending of the first glass plate 11 and the second glass plate 12 may be performed using gravity forming, press forming, roller forming, or the like. Methods for forming the first glass plate 11 and the second glass plate 12 are not particularly limited either, and for example, in the case of inorganic glass, glass plates formed by a float method or the like are preferably used.

A plate thickness of the first glass plate 11 is preferably 1.1 mm or more and 3 mm or less at the thinnest part. If the plate thickness of the first glass plate 11 is 1.1 mm or more, a strength such as a resistance to flying stones is sufficient, and if it is 3 mm or less, a mass of the laminated glass 10 does not become too large, which is preferable in terms of fuel efficiency of the vehicle. The plate thickness of the first glass plate 11 is more preferably 1.8 mm or more and 2.8 mm or less at the thinnest part, more preferably 1.8 mm or more and 2.6 mm or less, even more preferably 1.8 mm or more and 2.2 mm or less, and still even more preferably 1.8 mm or more and 2.1 mm or less.

The plate thickness of the second glass plate 12 is preferably 0.3 mm or more and 2.3 mm or less. If the plate thickness of the second glass plate 12 is 0.3 mm or more, properties for handling it become good, and if it is 2.3 mm or less, its mass does not become too large.

Further, in a case in which the plate thickness of the second glass plate 12 is not appropriate, when two sheets of glass with particularly deep curvatures are formed as the first glass plate 11 and the second glass plate 12, a mismatch occurs between shapes of the two sheets, which significantly affects a glass quality, such as a residual stress after compression bonding.

However, by setting the plate thickness of the second glass plate 12 to 0.3 mm or more and 2.3 mm or less, the glass quality, such as a residual stress, can be maintained. Setting the plate thickness of the second glass plate 12 to 0.3 mm or more and 2.3 mm or less is particularly effective in maintaining the glass quality of the glass with deep curvatures. The plate thickness of the second glass plate 12 is more preferably 0.5 mm or more and 2.2 mm or less, and even more preferably 0.7 mm or more and 2.1 mm or less. Within this range, the above-mentioned effects will be even more pronounced.

The first glass plate 11 and/or the second glass plate 12 may have different plate thicknesses at upper and lower edges of the glass plates. In this case, by forming a wedge shape in which a thickness of the laminated glass gradually increases from its lower edge to its upper edge, it is possible to provide a laminated glass for a head up display (HUD) as disclosed in WO 2016/121559.

Since a vehicle equipped with a head up display usually display a virtual image, a projection device has a large capacity due to incorporation of a concave lens for widening an image, a space required to ensure a focal distance between a light source and the concave lens, or the like. In one aspect of the present invention, the image projected in the light irradiation region R is a mechanism that scatters light in that region, and the projection device does not require a large capacity. Thus, by selecting the display content between a head up display portion and the light irradiation region R portion, the capacity of the entire projection device can be reduced.

A coating having water repellency and ultraviolet and infrared rays blocking properties, or a coating having low reflectance and low radiation properties may be provided on an outer side of the first glass plate 11 and/or the second glass plate 12. Also, a coating having ultraviolet and infrared rays blocking properties, a low radiation property, a visible light absorption property, coloring, or the like may be provided on a side of the first glass plate 11 and/or the second glass plate 12, which is in contact with the Interlayer 13.

If a coating having an infrared rays blocking property is provided on the opening portion 16 on the outer side of the first glass plate 11 and/or the second glass plate 12 or on the side in contact with the Interlayer 13, it is possible to ensure heat insulation while maintaining a high visible light transmittance, which is an appropriate configuration.

Also, it is particularly preferable to provide a coating having a low reflectance characteristic on the opening portion 16 of the fourth surface 12d of the second glass plate 12 in that the visible light transmittance is improved while making it easier to view the scenery outside the vehicle through the light irradiation region R.

In addition, a coating (for example, a P-polarized reflective coating) that improves a reflectance of visible light may be applied to all or part of the fourth surface 12d of the second glass plate 12. In this case, even if the vehicle exterior illuminance is high, a reflectance of the entire light irradiation region R is increased, thereby improving visibility of the projected image. For that reason, the light shielding portion ratio can be reduced, and visibility outside the vehicle can also be improved.

An example of such a coating is a configuration of an optical interference film in which high-refractive index layers and low-refractive index layers are alternately laminated. The high refractive index layer is made of an oxide or mixed oxide of Zn, Sn, Ti, Nb, Zr, Ni, In, Al, Ce, W, Mo, Sb, or Bi, or a nitride or oxynitride of Si, Al, Zr, B, Y, Ce, or La, and has a refractive index of 1.8 or more at 550 nm, and preferably 2.0 or more. Also, the low refractive index layer is selected from silicon oxide, silicon oxycarbide, aluminum oxide, mixed silicon aluminum oxide, mixed silicon zirconium oxide, aluminum doped zinc oxide, magnesium fluoride, or a mixture thereof, and has a refractive index of 1.7 or less at 550 nm, and preferably 1.6 or less.

By laminating the high refractive index layers 50 to 100 nm and the low refractive index layers 70 to 160 nm at least from the fourth surface 12d of the second glass plate 12, the visible light reflectance can be improved.

Other coatings that improve the reflectance of visible light include those that alternately laminate Ag or Ag compounds, which are conductive materials, with metal oxides or metal nitrides (for example, as described in WO 2016/058474 and WO 2019/206493).

When the first glass plate 11 and the second glass plate 12 are curved inorganic glass, the first glass plate 11 and the second glass plate 12 are bent after being formed by a float method or the like and before being bonded with the Interlayer 13. The bending is performed by softening the glass by heating. A heating temperature of the glass during bending may be controlled to be in the range of approximately 550°C to 700°C.

[Interlayer] Thermoplastic resins are often used for the Interlayer 13, and examples thereof include thermoplastic resins that have typically been used for this type of application, such as plasticized polyvinyl acetal resins, plasticized polyvinyl chloride resins, saturated polyester resins, plasticized saturated polyester resins, polyurethane resins, plasticized polyurethane resins, ethylene-vinyl acetate copolymer resins, ethylene-ethyl acrylate copolymer resins, cycloolefin polymer resins, ionomer resins, and the like. Also, resin compositions containing modified block copolymer hydrogenates described in Japanese Patent No. 6065221 can also be appropriately used.

Among these, plasticized polyvinyl acetal resins are appropriately used in that they have an excellent balance of all properties such as transparency, weather resistance, strength, adhesive strength, penetration resistance, impact energy absorption, moisture resistance, heat insulation, and sound insulation. These thermoplastic resins may be used alone or in combination of two or more types. The term "plasticized" in the plasticized polyvinyl acetal resins means that it has been plasticized by adding a plasticizer. The same applies to other plasticized resins.

However, when a specific object is enclosed in the Interlayer 13, it may be deteriorated by a specific plasticizer depending on a type of the enclosed object, and in such a case, a resin that does not substantially contain that plasticizer is preferably used. Examples of the resin that does not contain a plasticizer include an ethylene-vinyl acetate copolymer (EVA) resin, and the like.

Examples of the polyvinyl acetal resins include polyvinyl formal resins obtained by reacting polyvinyl alcohol (PVA) with formaldehyde, polyvinyl acetal resins in the narrow sense obtained by reacting PVA with acetaldehyde, polyvinyl butyral (PVB) resins obtained by reacting PVA with n-butyl aldehyde, and the like, and the PVB resins are particularly appropriate in that they have an excellent balance of all properties such as transparency, weather resistance, strength, adhesive strength, penetration resistance, impact energy absorption, moisture resistance, heat insulation, and sound insulation. Also, these polyvinyl acetal resins may be used alone or in combination of two or more types.

However, the material forming the Interlayer 13 is not limited to thermoplastic resins. The Interlayer 13 may also contain functional particles such as infrared rays absorbing agents, ultraviolet rays absorbing agents, and luminescent agents. Also, the Interlayer 13 may have a colored portion called a shade band. Coloring pigments used to form the colored portion are those that can be used for plastics, of which an amount to be added may be adjusted so that a visible light transmittance of the colored portion is 40% or less, and examples thereof include, for example, organic coloring pigments such as azo-based pigments, phthalocyanine-based pigments, quinacridone-based pigments, perylene-based pigments, perinone-based pigments, dioxazine-based pigments, anthraquinone-based pigments, and isoindolino-based pigments, and inorganic color pigments such as oxides, hydroxides, sulfides, chromate, sulfates, carbonates, silicates, phosphates, arsenates, ferrocyanides, carbon, and metal powders. These coloring pigments may be used alone or in combination of two or more types.

The Interlayer 13 may have a plurality of layers. For example, the Interlayer 13 may have three or more layers. For example, if the Interlayer is formed of three or more layers and shear modulus of any layer other than layers on both sides is made smaller than shear modulus of the layers on both sides by adjusting the plasticizer or the like, the sound insulation of the laminated glass 10 can be improved. In this case, the shear modulus of the layers on both sides may be the same or different from each other.

A film thickness of the Interlayer 13 is preferably 0.5 mm or more at its thinnest part. Also, if the Interlayer 13 has a plurality of layers, the film thickness of the Interlayer 13 is the total plate thickness of the respective layers. If the film thickness of the Interlayer 13 at its thinnest part is 0.5 mm or more, the impact resistance required for the laminated glass is sufficient. Also, the film thickness of the Interlayer 13 is preferably 3 mm or less at its thickest part. If the maximum film thickness of the Interlayer 13 is 3 mm or less, the mass of the laminated glass does not become too large. The maximum film thickness of the Interlayer 13 is more preferably 2.8 mm or less, and even more preferably 2.6 mm or less.

The Interlayer 13 may have a wedge shaped in which the film thickness gradually increases from the lower side toward the upper side. In this case, it is assumed that a head up display (HUD) is mounted in the vehicle, and as described above, the combination of the head up display portion and the light irradiation region R portion is effective in reducing the capacity of the entire projection device.

Further, if the Interlayer 13 has a plurality of layers, the respective layers in the Interlayer 13 are preferably made of the same material, but may be made of different materials. However, from the viewpoint of adhesion to the first glass plate 11 and the second glass plate 12, or functional materials to be inserted into the laminated glass 10, it is desirable to use the above-mentioned material for 50% or more of the film thickness of the Interlayer 13.

In order to produce the Interlayer 13, for example, the above-mentioned resin material that will become the Interlayer is appropriately selected and extruded in a heated and molten state using an extruder. Extrusion conditions such as an extrusion speed of the extruder are set to be uniform. After that, in accordance with a design of the laminated glass, the extruded resin film is stretched if needed to give curvatures to the upper and lower sides, thereby completing the Interlayer 13.

[Laminated Glass] The total thickness of the laminated glass 10 is preferably 2.8 mm to 10 mm. If the total thickness of the laminated glass 10 is 2.8 mm or more, sufficient rigidity can be ensured. If the total thickness of the laminated glass 10 is 10 mm or less, sufficient transmittance can be obtained and haze can be reduced.

On at least one side of the laminated glass 10, a plate misalignment between the first glass plate 11 and the second glass plate 12 is preferably 1.5 mm or less, and more preferably 1 mm or less. Here, the plate misalignment between the first glass plate 11 and the second glass plate 12 indicates an amount of misalignment between the outer peripheral side surface of the first glass plate 11 and the outer peripheral side surface of the second glass plate 12 in a plan view.

If the plate misalignment between the first glass plate 11 and the second glass plate 12 on at least one side of the laminated glass 10 is 1.5 mm or less, it is appropriate in terms of not impairing the exterior shape. If the plate misalignment between the first glass plate 11 and the second glass plate 12 on at least one side of the laminated glass 10 is 1.0 mm or less, it is even more appropriate in terms of not impairing the exterior shape.

[Method for manufacturing laminated glass] In order to manufacture the laminated glass 10, first, the shielding layer 14 is formed on the first glass plate 11 and/or the second glass plate 12. However, the shielding layer 14 is formed if needed. Here, as shown in FIG. 1(b), a case in which the shielding layer 14 is formed on the fourth surface 12d of the second glass plate 12 will be described below as an example.

The shielding layer 14 can be formed using, for example, a ceramic color paste, which is inorganic ink containing a black pigment and a meltable glass frit. Specifically, the shielding layer 14 can be formed by applying the ceramic color paste to the fourth surface 12d of the second glass plate 12 by screen printing or the like, and then firing it. In this case, the shielding layer 14 can be formed before bending the second glass plate 12.

Next, the first glass plate 11 and the second glass plate 12 are bent. The first glass plate 11 and the second glass plate 12 are bent into a desired shape that is predetermined by design drawings, CAD data, or the like. For the bending of the first glass plate 11 and the second glass plate 12, for example, a gravity forming method can be used in which the glass plates are placed on a ring mold to pass through a heating furnace, heated and softened, and then bent into the desired shape by gravity. Alternatively, a press forming method can be used in which the glass plates are sandwiched between a male mold and a female mold, and then pressurized and molded.

As another method for forming the shielding layer 14, the shielding layer 14 may be formed by applying organic ink containing a black or dark pigment by screen printing or the like to the fourth surface 12d of the second glass plate 12 and drying it. In this case, the shielding layer 14 can be formed after the second glass plate 12 is bent.

When the second glass plate 12 on which the shielding layer 14 is formed using inorganic ink is bent, a residual stress in a region close to the shielding layer 14 increases. This is because, when the second glass plate 12 is bent and slowly cooled, a portion with the shielding layer 14 is difficult to cool, while a portion without the shielding layer 14 is easy to cool. For that reason, in the region close to the shielding layer 14, a distortion caused by the residual stress becomes more noticeable. By forming the shielding layer 14 using organic ink after bending the second glass plate 12, the distortion due to the residual stress can be reduced.

Next, the organic ink that will become the light shielding portion 17 is applied in a dot pattern by screen printing or the like to the fourth surface 12d of the second glass plate 12, and dried to form the light shielding portion 17. Also, the light shielding portion 17 may be formed using inorganic ink. If inorganic ink is used, before the second glass plate 12 is bent, the inorganic ink that will become the light shielding portion 17 is applied in a dot pattern by screen printing or the like to the fourth surface 12d of the second glass plate 12, and then fired, so that the light shielding portion can be formed.

Next, the Interlayer 13 is sandwiched between the first glass plate 11 and the second glass plate 12 to form a laminate. Then, for example, this laminate is placed in a rubber bag, a rubber chamber, a resin bag, or the like, and bonded at a temperature controlled within a range of about 70°C to 110°C in a vacuum controlled within a range of a gauge pressure of -100 kPa to -65 kPa. Heating conditions, temperature conditions, and a lamination method are selected as appropriate.

Further, by performing a pressing process of heating and pressurizing under controlled conditions, for example, within a range of a temperature of 100°C to 150°C and an absolute pressure of 0.6 MPa to 1.5 MPa, the laminated glass 10 with superior durability can be obtained. However, in some cases, this heating and pressurizing process may not be used in consideration of simplifying the process and characteristics of the material sealed in the laminated glass 10.

In order to manufacture the laminated glass 10, a method called "cold bending" may be used in which either or both of the first glass plate 11 and the second glass plate 12 are bonded together in an elastically deformed state. Cold bending can be achieved by using a laminate including the first glass plate 11, the Interlayer 13, and the second glass plate 12 that are fixed by a temporary fixing means such as a tape, and a publicly known pre-pressing device such as a nip roller, a rubber bag, or a rubber chamber, and an autoclave.

In addition to the Interlayer 13, a film or device having a function such as a heating wire, infrared rays reflection, infrared rays blocking, light emission, power generation, light control, a touch panel, visible light reflection, visible light reduction, scattering, decoration, absorption, or the like may be provided between the first glass plate 11 and the second glass plate 12 within a range of not impairing the effects of the present application. In particular, if a light control film is provided, the light control is controlled to a light transmission mode, a light non-transmission mode, and a light transmittance between the modes, thereby contributing to improving visibility due to a contrast ratio with respect to the light shielding portion. Also, a film having a function such as anti-fogging, water repellency, heat shielding, or low reflection may be provided on the surface of the laminated glass 10. Further, a film having a function such as heat shielding or heat generation may be provided on the second surface 11b of the first glass plate 11 and the fourth surface 12d of the second glass plate 12.

If a film having a function of blocking infrared rays is provided on the opening portion 16 between the first glass plate 11 and the second glass plate 12, it is particularly appropriate as the configuration because it can ensure heat shielding while maintaining a high visible light transmittance.

### <Modified Example 1>

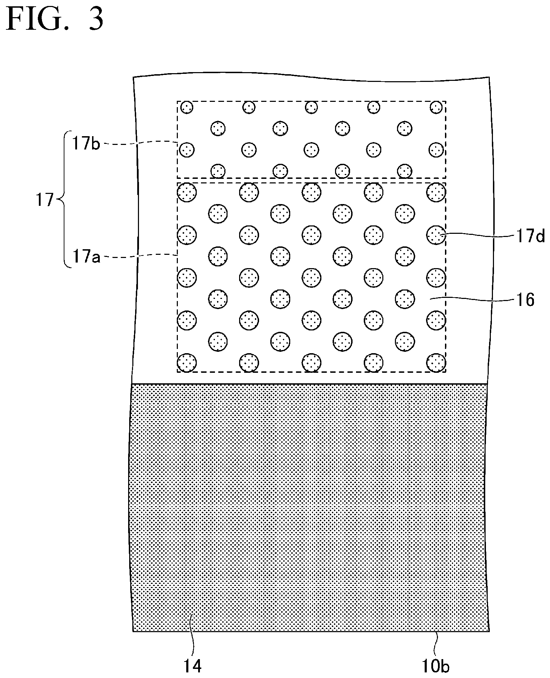

FIG. 3 is a partial plan view illustrating a laminated glass according to Modified Example 1. As shown in FIG. 3, in the laminated glass 10, depending on locations, the density of the first dots 17d may be changed to form a gradation pattern.

In the example of FIG. 3, the plurality of first dots 17d forming the light shielding portion 17 are of the same density in a first region 17a located on the lower side 10b of the laminated glass 10. In contrast, in a second region 17b adjacent to the upper side of the first region 17a, the density of the first dots 17d is adjusted so that the dots become sparser toward a side farther from the first region 17a, forming a gradation pattern.

By forming the gradation pattern as shown in FIG. 3, a boundary between the light shielding portion 17 and the opening portion 16 located above the light shielding portion 17 can be made less noticeable. Not only the region adjacent to the upper side of the first region 17a, but also the region adjacent to the right side, the region adjacent to the left side, and/or the region adjacent to the lower side of the first region 17a may be formed with a gradation pattern. Also, in the case of FIG. 3, the first region 17a is the light irradiation region R.

### <Modified Example 2>

FIG. 4 is a partial cross-sectional view illustrating a laminated glass according to Modified Example 2. FIGS. 4(a) and 4(b) are partial cross-sectional views of the light shielding portion and its vicinity. In FIGS. 4(a) and 4(b), the low brightness portion 18 is provided on the first glass plate 11 side of the light shielding portion 17. The low brightness portion 18 is, for example, configured of a dot pattern in which a plurality of second dots 18d are disposed apart from one another. That is, the low brightness portion 18 is a collection of the plurality of second dots 18d.

In the present application, the low brightness portion indicates a portion in which the brightness L* value in the L*a*b* color system is 30 or less. In the low brightness portion 18, the brightness L* value is preferably 25 or less.

Specifically, in the example shown in FIG. 4(a), the second dots 18d forming the low brightness portion 18 are provided on the fourth surface 12d of the second glass plate 12. Then, the first dots 17d forming the light shielding portion 17 are respectively laminated on sides of the second dots 18d opposite to the fourth surface 12d. Also, in the example shown in FIG. 4(b), the second dots 18d forming the low brightness portion 18 are provided on the second surface 11b of the first glass plate 11, and the respective first dots 17d forming the light shielding portion 17 are provided on the fourth surface 12d of the second glass plate 12. In both FIGS. 4(a) and 4(b), the second dots 18d are disposed at positions overlapping the first dots 17d in a plan view.

In both FIGS. 4(a) and 4(b), an area of each of the first dot 17d is preferably equal to or smaller than an area of the second dot 18d that overlaps in a plan view. In the illustrated example, the area of each of the first dots 17d is equal to the area of the second dot 18d that overlaps in a plan view.

The low brightness portion 18 can be formed on the second surface 11b of the first glass plate 11 or the fourth surface 12d of the second glass plate 12, for example, using inorganic ink or organic ink exemplified as the material of the shielding layer 14 in the description of the method for manufacturing the laminated glass.

For example, if inorganic ink is used for a material of the low brightness portion 18, and the low brightness portion 18 is formed on the same surface as the shielding layer 14, the inorganic ink that will become the low brightness portion 18 is also applied when the inorganic ink that will become the shielding layer 14 is applied, and fired along with the shielding layer 14, so that the low brightness portion 18 can be formed. This process is performed before the bending of the first glass plate 11 and the second glass plate 12.

Also, if organic ink is used for the material of the low brightness portion 18, the organic ink that will become the low brightness portion 18 is applied to the second surface 11b of the first glass plate 11 or the fourth surface 12d of the second glass plate 12 by screen printing or the like, and then dried to form the low brightness portion 18. This process is performed after the bending of the first glass plate 11 and the second glass plate 12. When the organic ink is used for the material of the low brightness portion 18, as in the case of the shielding layer 14, it is possible to reduce a distortion caused by a residual stress in the opening portion 16 close to the low brightness portion 18.

In order to laminate the light shielding portion 17 on the low brightness portion 18 formed with inorganic ink using inorganic ink, first, the inorganic ink that will become the low brightness portion 18 is applied to the fourth surface 12d of the second glass plate 12 by screen printing or the like, and is heated and dried under controlled conditions, for example, within a range of a temperature of 150°C to 200°C. After that, the inorganic ink that will become the light shielding portion 17 is applied to the low brightness portion 18 by screen printing or the like, and is heated and dried under the above-mentioned conditions. Alternatively, the inorganic ink that will become the low brightness portion 18 is applied to the fourth surface 12d of the second glass plate 12 by screen printing or the like, and the inorganic ink that will become the light shielding portion 17 is further applied to the low brightness portion 18 by screen printing or the like, and both inorganic inks are heated and dried together under the above-mentioned conditions. These processes are performed before the bending of the first glass plate 11 and the second glass plate 12.

In the example shown in FIG. 4(a), in order to laminate the light shielding portion 17 using organic ink on the low brightness portion 18 formed with inorganic ink, first, the inorganic ink that will become the low brightness portion 18 is applied to the fourth surface 12d of the second glass plate 12 by screen printing or the like, and then fired. After that, the second glass plate 12 on which the low brightness portion 18 is formed is bent. Then, the organic ink that will become the light shielding portion 17 is applied to the low brightness portion 18 by screen printing or the like, and then dried to form the light shielding portion 17.

In order to laminate the light shielding portion 17 using organic ink on the low brightness portion 18 formed with organic ink, after the bending of the second glass plate 12, the organic ink that will become the low brightness portion 18 is applied by screen printing or the like, and then dried to form the low brightness portion 18. After that, the organic ink that will become the light shielding portion 17 is applied onto the low brightness portion 18 by screen printing or the like, and then dried to form the light shielding portion 17.

In this way, it is preferable to dispose the second dots 18d to be closer to the first glass plate 11 side than the first dots 17d respectively at positions at which they overlap the first dots 17d in a plan view, and to set the areas of the first dots 17d to be respectively equal to or smaller than the areas of the second dots 18d that overlap them in a plan view. This improves the exterior shape seen from the first surface 11a side of the first glass plate 11. That is, when the laminated glass 10 is mounted on the vehicle, even if the laminated glass 10 is viewed from the outside of the vehicle (the first surface 11a side of the first glass plate 11), the light shielding portion 17 that is a high brightness portion is not visible, but the low brightness portion 18 is visible. The low brightness portion 18 has a low brightness, and thus even if it is irradiated with sunlight or the like, it absorbs much of the irradiated light, and is therefore difficult to be visible from the outside of the vehicle. As a result, the exterior shape seen from the outside of the vehicle can be improved as compared to a case in which the light shielding portion 17 that is a high brightness portion is visible from the outside of the vehicle without providing the low brightness portion 18. Also, the form shown in FIG. 4(a) is more advantageous than the form shown in FIG. 4(b) in that the misalignment between the first dots 17d and the second dots 18d that overlap each other in a plan view can be reduced.

### <Modified Example 3>

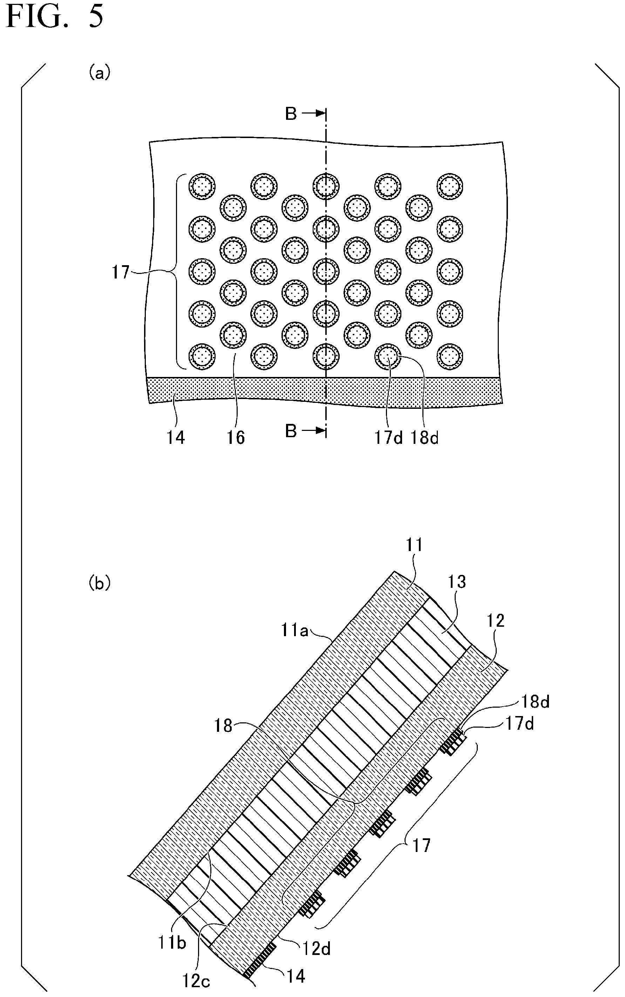

FIG. 5 is a diagram illustrating a laminated glass according to Modified Example 3. In detail, FIG. 5(a) is a partial plan view of a light shielding portion and its vicinity, and FIG. 5(b) is a partial cross-sectional view along line B-B in FIG. 5(a).

In FIGS. 5(a) and 5(b), similarly to FIG. 4(a), each of the second dots 18d is provided at a position at which it overlaps each of the first dots 17d in a plan view. However, in FIGS. 5(a) and 5(b), unlike FIG. 4(a), the area of the light shielding portion 17 is smaller than the area of the low brightness portion 18 in a plan view. That is, in a plan view, the area of each of the first dots 17d is smaller than the area of each of the second dots 18d.

In this way, by making the area of each of the first dots 17d smaller than the area of each of the second dots 18d, the low brightness portion 18 can be visible more reliably when the laminated glass 10 is mounted on the vehicle and viewed from the outside of the vehicle. This is effective, for example, when there is a misalignment between a center of the first dot 17d and a center of the second dot 18d due to manufacturing variations.

The area of each of the first dots 17d is preferably 0.8 times or more the area of the second dot 18d that overlaps it in a plan view, and is preferably equal to or less than the area of the second dot 18d that overlaps it in a plan view. By not making the area of each of the first dots 17d too small, visibility of the image of the light emitted from the projection device can be ensured. Also, in FIGS. 5(a) and 5(b), an example in which the second dots 18d are provided on the fourth surface 12d of the second glass plate 12 has been shown, but the second dots 18d may be provided on the second surface 11b of the first glass plate 11.

### <Present examples>

The present examples and comparative examples will be described below, but the present invention is not limited to these examples. Also, Examples 1 to 5 and Examples 11 to 32 are the present examples, and Examples 6 to 10 are comparative examples.

### (Examples 1 to 5)

In Examples 1 to 5, the overall visible light transmittance T was designed to be 70%, and the laminated glass with the structure shown in FIGS. 1(a) and 1(b) was produced. In that case, a clear Interlayer with a film thickness of 0.8 mm and a visible light transmittance of 97% was used for the Interlayer. Then, light was emitted from the projection device onto the light irradiation region R of the produced laminated glass, and visibility of the image and visibility outside the vehicle were evaluated visually. Also, the light shielding portion was formed in a dot pattern in which the shape of each of the first dots was circular.

### [Example 1]

In Example 1, green glass with a plate thickness of 2.0 mm and a visible light transmittance of 86% was used for the first glass plate and the second glass plate. In addition, in the light irradiation region R, the light shielding portion ratio RSb was set to 13%. In the light irradiation region R of the produced laminated glass, the visible light transmittance a of the opening portion was 80%, and the visible light transmittance b of the light shielding portion was 0%.

### [Example 2]

In Example 2, green glass with a plate thickness of 1.8 mm and a visible light transmittance of 87% was used for the first glass plate and the second glass plate. In addition, in the light irradiation region R, the light shielding portion ratio RSb was set to 14%. In the light irradiation region R of the produced laminated glass, the visible light transmittance a of the opening portion was 81%, and the visible light transmittance b of the light shielding portion was 0%.

### [Example 3]

In Example 3, clear glass with a plate thickness of 2.0 mm and a visible light transmittance of 92% was used for the first glass plate and the second glass plate. In addition, in the light irradiation region R, the light shielding portion ratio RSb was set to 21%. In the light irradiation region R of the produced laminated glass, the visible light transmittance a of the opening portion was 89%, and the visible light transmittance b of the light shielding portion was 0%.

### [Example 4]

In Example 4, clear glass with a plate thickness of 1.8 mm and a visible light transmittance of 92% was used for the first glass plate and the second glass plate. In addition, in the light irradiation region R, the light shielding portion ratio RSb was set to 22%. In the light irradiation region R of the produced laminated glass, the visible light transmittance a of the opening portion was 90%, and the visible light transmittance b of the light shielding portion was 0%.

### [Example 5]

In Example 5, clear glass with a plate thickness of 2.0 mm and a visible light transmittance of 92% was used for the first glass plate. Green glass with a plate thickness of 1.8 mm and a visible light transmittance of 87% was used for the second glass plate. In addition, in the light irradiation region R, the light shielding portion ratio RSb was set to 18%. In the light irradiation region R of the produced laminated glass, the visible light transmittance a of the opening portion was 85%, and the visible light transmittance b of the light shielding portion was 0%.

### (Examples 6 to 10)

In Examples 6 to 10, the laminated glass was produced by designing the overall visible light transmittance T to be 70%. However, unlike Examples 1 to 5, instead of providing the light shielding portion on the fourth surface of the second glass plate, a film was enclosed in the Interlayer to form the light shielding portion. For that reason, in the light irradiation region R, the light shielding portion ratio RSb was 100%. Then, light was emitted from the projection device onto the light irradiation region R of the produced laminated glass, and visibility of the image and visibility outside the vehicle were visually evaluated.

### [Example 6]

The first glass plate, the second glass plate, and the Interlayer were the same as in Example 1. A film with a visible light transmittance of 88% for the film alone was used. **In** the light irradiation region R of the produced laminated glass, the visible light transmittance a of the opening portion was 80%, and the visible light transmittance b of the light shielding portion was 70%. **In** addition, in Examples 6 to 10, the visible light transmittance a of the opening portion is a visible light transmittance of a region of the laminated glass in which the film is not enclosed.

### [Example 7]

The first glass plate, the second glass plate, and the Interlayer were the same as in Example 2. Also, a film with a visible light transmittance of 86% for the film alone was used. **In** the light irradiation region R of the produced laminated glass, the visible light transmittance a of the opening portion was 81%, and the visible light transmittance b of the light shielding portion was 70%.

### [Example 8]

The first glass plate, the second glass plate, and the Interlayer were the same as in Example 3. Also, a film with a visible light transmittance of 79% for the film alone was used. **In** the light irradiation region R of the produced laminated glass, the visible light transmittance a of the opening portion was 89%, and the visible light transmittance b of the light shielding portion was 70%.

### [Example 9]

The first glass plate, the second glass plate, and the Interlayer were the same as in Example 4. Also, a film with a visible light transmittance of 78% for the film alone was used. In the light irradiation region R of the produced laminated glass, the visible light transmittance a of the opening portion was 90%, and the visible light transmittance b of the light shielding portion was 70%.

### [Example 10]

The first glass plate, the second glass plate, and the Interlayer were the same as in Example 5. Also, a film with a visible light transmittance of 82% for the film alone was used. In the light irradiation region R of the produced laminated glass, the visible light transmittance a of the opening portion was 85%, and the visible light transmittance b of the light shielding portion was 70%.

### (Examples 11 to 15)

In Examples 11 to 15, the overall visible light transmittance T was designed to be 50%, and the laminated glass was produced with the structure shown in FIGS. 1(a) and 1(b). However, in Examples 11 to 15, the light irradiation region R was located in a region in which the visible light transmittance does not have to be 70% or more according to regulations. Then, light was emitted from the projection device onto the light irradiation region R of the produced laminated glass, and visibility of the image and visibility outside the vehicle were visually evaluated. Also, the light shielding portion was formed in a dot pattern in which the shape of each of the first dots was circular.

### [Example 11]

In Example 11, the same as Example 1 was performed, except that the light shielding portion ratio RSb was set to 38%.

### [Example 12]

In Example 12, the same as Example 2 was performed, except that the light shielding portion ratio RSb was set to 38%.

### [Example 13]

In Example 13, the same as Example 3 was performed, except that the light shielding portion ratio RSb was set to 44%.

### [Example 14]

In Example 14, the same as Example 4 was performed, except that the light shielding portion ratio RSb was set to 44%.

### [Example 15]

In Example 15, the same as Example 5 was performed, except that the light shielding portion ratio RSb was set to 41%.

### (Examples 16 and 17)

In Examples 16 and 17, the laminated glass with the structure shown in FIGS. 1(a) and 1(b) was produced, and a coating was applied to the fourth surface of the second glass plate. The coating had a two-layer structure in which a low refractive index layer made of SiO₂ and a high refractive index layer made of TiO₂ were laminated, and the fourth surface side of the second glass plate was the low refractive index layer. Then, light was emitted from the projection device to the light irradiation region R of the produced laminated glass, and visibility of the image and visibility outside the vehicle were visually evaluated.

[Example 16] In Example 16, the same as Example 1 was performed, except that a coating was applied to the fourth surface of the second glass plate.

[Example 17] In Example 17, the same as Example 2 was performed except that a coating was applied to the fourth surface of the second glass plate.

### (Examples 18 to 22)

In Examples 18 to 22, the density of the first dots was adjusted so that the light shielding portion ratio RSb was 50%, and the laminated glass with the structure shown in FIGS. 1(a) and 1(b) was produced. Then, light was emitted from the projection device onto the light irradiation region R of the produced laminated glass, and visibility of the image and visibility outside the vehicle were evaluated visually.

### [Example 18]

In Example 18, the same as Example 1 was performed, except that the light shielding portion ratio RSb was set to 50%. In the light irradiation region R of the produced laminated glass, the overall visible light transmittance T was 40%.

### [Example 19]

In Example 19, the same as Example 2 was performed, except that the light shielding portion ratio RSb was set to 50%. In the light irradiation region R of the produced laminated glass, the overall visible light transmittance T was 41%.

### [Example 20]

In Example 20, the same as Example 3 was performed, except that the light shielding portion ratio RSb was set to 50%. In the light irradiation region R of the produced laminated glass, the overall visible light transmittance T was 45%.

### [Example 21]

In Example 21, the same as Example 4 was performed, except that the light shielding portion ratio RSb was set to 50%. In the light irradiation region R of the produced laminated glass, the overall visible light transmittance T was 45%.

### [Example 22]

In Example 22, the same as Example 5 was performed, except that the light shielding portion ratio RSb was set to 50%. In the light irradiation region R of the produced laminated glass, the overall visible light transmittance T was 43%.

### (Evaluation results)

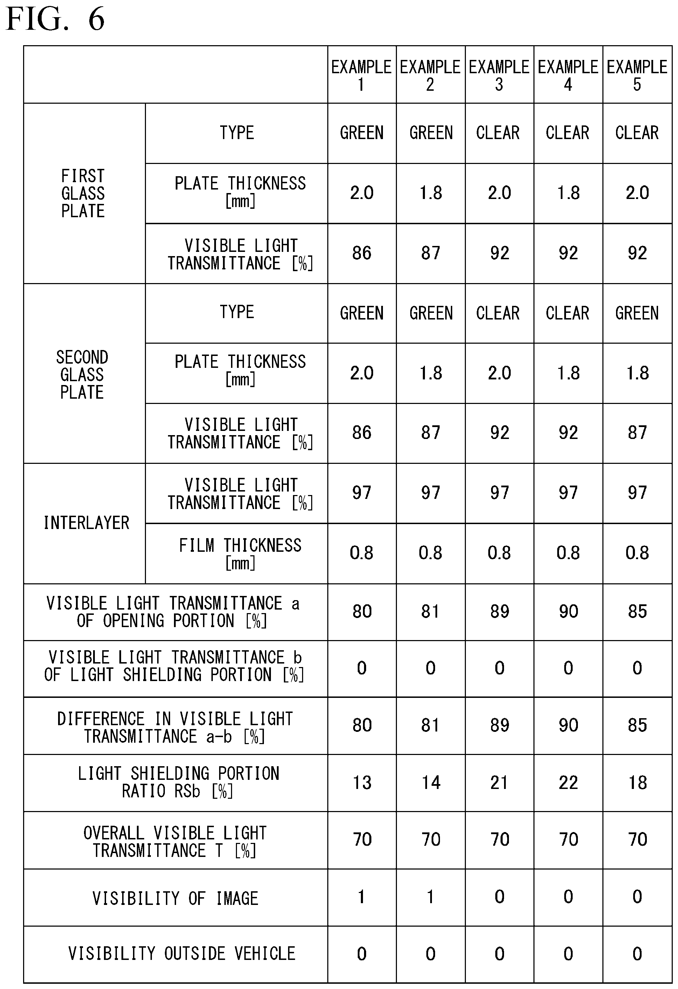

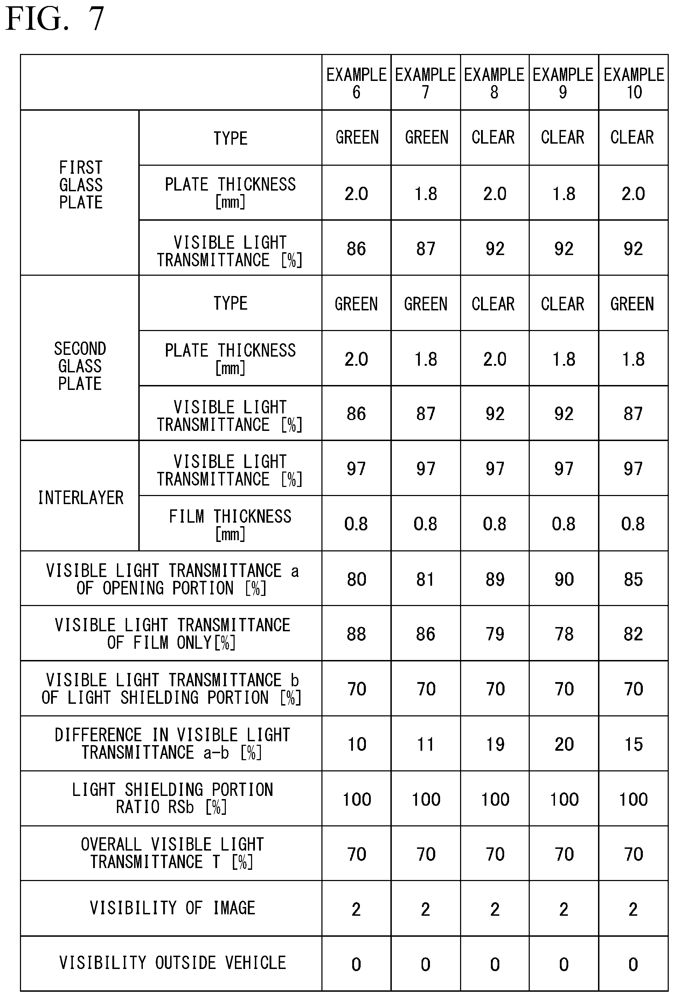

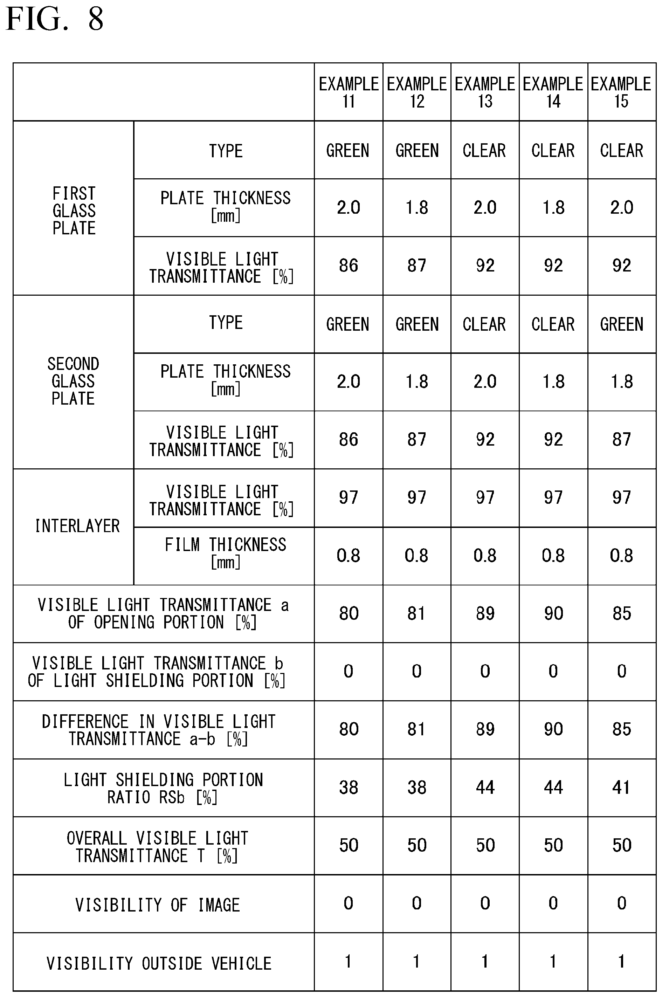

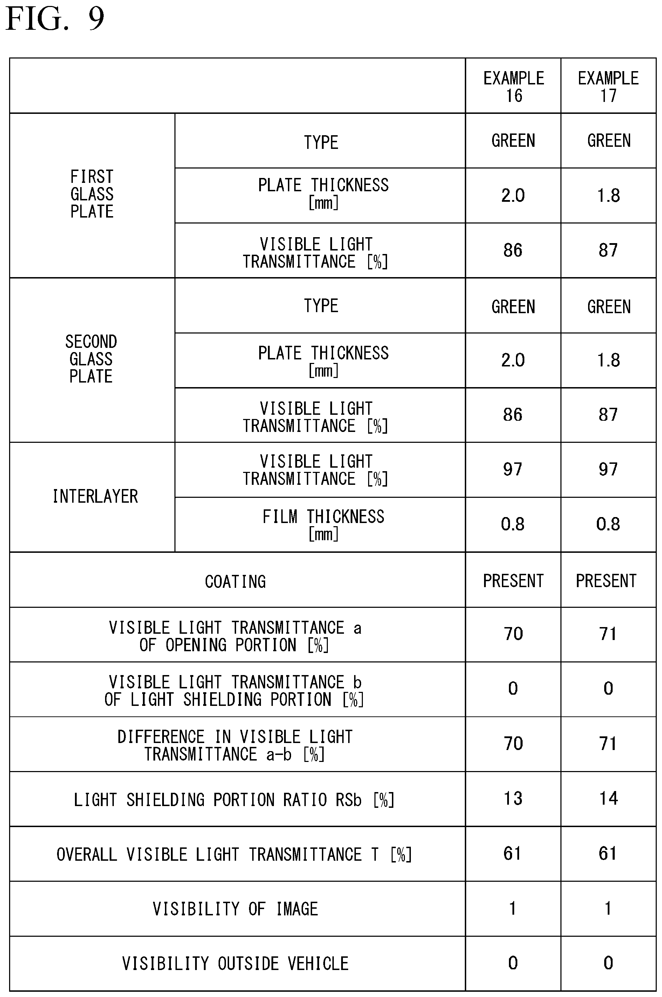

The evaluation results of Examples 1 to 5 are shown in FIG. 6, the evaluation results of Examples 6 to 10 are shown in FIG. 7, the evaluation results of Examples 11 to 15 are shown in FIG. 8, the evaluation results of Examples 16 and 17 are shown in FIG. 9, and the evaluation results of Examples 18 to 22 are shown in FIG. 10. In FIGS. 6 to 10, visibility of the image was rated at 0 when it was visible with external light having an vehicle exterior illuminance of 20,000 lx or more. Also, the visibility was rated at 1 when it was not visible with external light having an vehicle exterior illuminance of 20,000 lx or more, but was visible with external light having an vehicle exterior illuminance of 3,000 lx or more and less than 20,000 lx. Further, the visibility was rated at 2 when it was not visible with external light having an vehicle exterior illuminance of 3,000 lx or more, but was visible with external light having an vehicle exterior illuminance of less than 3,000 lx.

Also, in FIGS. 6 to 10, the visibility outside the vehicle was rated at 0 when the outside of the vehicle was visible when light was being emitted from the projection device. In addition, the visibility was rated at 1 when the outside of the vehicle was not visible when light was being emitted from the projection device, but was visible when light was not being emitted from the projection device. Further, the visibility was rated at 2 when the outside of the vehicle was less likely to be visible even when light was not being emitted from the projection device.

Also, in FIGS. 6 to 10, a difference between the visible light transmittances (a-b) and the visible light transmittance T of the overall light irradiation region R were shown. In addition, the difference between the visible light transmittances (a-b)=(visible light transmittance a of the opening portion)-(visible light transmittance b of the light shielding portion). Further, as described above, T=a×(100-RSb)+b×RSb.

As shown in FIG. 6, in Examples 1 to 5, the image was visible even when there was external light (when the vehicle exterior illuminance was 3,000 lx or more). This result was conceivably obtained due to the fact that the difference between the visible light transmittances (a-b) was 80% or more in Examples 1 to 5. In particular, in Examples 3 to 5, the image was visible even when the external light was strong (when the vehicle exterior illuminance was 20,000 lx or more). This result was conceivably obtained due to the fact that the light shielding portion ratio RSb was 13% and 14% in Examples 1 and 2, while the light shielding portion ratio RSb was increased to 18% or more in Examples 3 to 5.

In Example 5, since the visible light transmittance of the opening portion was increased by using clear glass with a high visible light transmittance for the first glass plate, the light shielding portion ratio RSb could be increased. In addition, in Examples 3 and 4, by using clear glass with a high visible light transmittance for the first and second glass plates, the visible light transmittance of the opening portion could be further increased, and thus the light shielding portion ratio RSb could be further increased.

On the other hand, as shown in FIG. 7, in Examples 6 to 10, the image was visible only when the surroundings were dark (that is, when the vehicle exterior illuminance was less than 3,000 lx). This result was conceivably obtained due to the fact that, in the case of laminated glass in which a film is enclosed, such as in Examples 6 to 10, the difference between the visible light transmittances (a-b) is 20% or less. That is, it is conceivable that, when there was external light (when the vehicle exterior illuminance is 3,000 lx or more) or when external light was strong (when the vehicle exterior illuminance is 20,000 lx or more), the external light passed through the film or was scattered by the film, and thus the visibility of the image was reduced.

Also, as shown in FIG. 6, if the light shielding portion ratio RSb was 22% or less, the scenery outside the vehicle could be visible through the light irradiation region R even when light was being emitted from the projection device. In addition, as shown in FIG. 8, if the light shielding portion ratio RSb was 44% or less, the scenery outside the vehicle could be visible through the light irradiation region R when light was not being emitted from the projection device.

Also, as shown in FIG. 9, if the difference between the visible light transmittances (a-b) was 70% or more, the image was visible even when there was external light (when the vehicle exterior illuminance was 3,000 lx or more).

In this way, it has been found that the laminated glass obtained by providing the light shielding portion so that the difference in visible light transmittance (a-b) between the light shielding portion and the opening portion is 70% or more can improve the visibility of the image when there is external light, as compared to the laminated glass in the related art in which a film is enclosed.

Also, as shown in FIG. 10, even when the light shielding portion ratio RSb was 50%, the scenery outside the vehicle was visible through the light irradiation region R when light was not being emitted from the projection device. That is, from the results of FIGS. 6, 8, 9, and 10, if the light shielding portion ratio RSb was 50% or less, the scenery outside the vehicle was visible through the light irradiation region R when light was not being emitted from the projection device. In addition, from the results of FIGS. 6 and 9, if the light shielding portion ratio RSb was 30% or less, the scenery outside the vehicle was visible through the light irradiation region R even when light was being emitted from the projection device.

### (Examples 23 to 32)

In Examples 23 to 32, visibility of low brightness portions from the outside of the vehicle was visually evaluated when the low brightness portions with different brightnesses were provided on the second or fourth surface of the laminated glass.

### [Example 23]

In Example 23, green glass with a plate thickness of 2.0 mm was used for the first glass plate and the second glass plate. A clear Interlayer with a film thickness of 0.8 mm was used for the Interlayer. A low brightness portion with a brightness L* value of 15 was provided on the second surface.

### [Example 24]

In Example 24, the same as Example 23 was used, except that a low brightness portion with a brightness L* value of 25 was provided on the second surface.

### [Example 25]

In Example 25, the same as Example 23 was used, except that a low brightness portion with a brightness L* value of 50 was provided on the second surface.

### [Example 26]

In Example 26, the same as Example 23 was used, except that a low brightness portion with a brightness L* value of 75 was provided on the second surface.

### [Example 27]

In Example 27, the same as Example 23 was used, except that a low brightness portion with a brightness L* value of 85 was provided on the second surface.

### [Example 28]

In Example 28, the same as Example 23 was used, except that a low brightness portion with a brightness L* value of 15 was provided on the fourth surface.

### [Example 29]

In Example 29, the same as Example 23 was used, except that a low brightness portion with a brightness L* value of 25 was provided on the fourth surface.

### [Example 30]

In Example 30, the same as Example 23 was used, except that a low brightness portion with a brightness L* value of 50 was provided on the fourth surface.

### [Example 31]

In Example 31, the same as Example 23 was used, except that a low brightness portion with a brightness L* value of 75 was provided on the fourth surface.

### [Example 32]

In Example 32, the same as Example 23 was used, except that a low brightness portion with a brightness L* value of 85 was provided on the fourth surface.

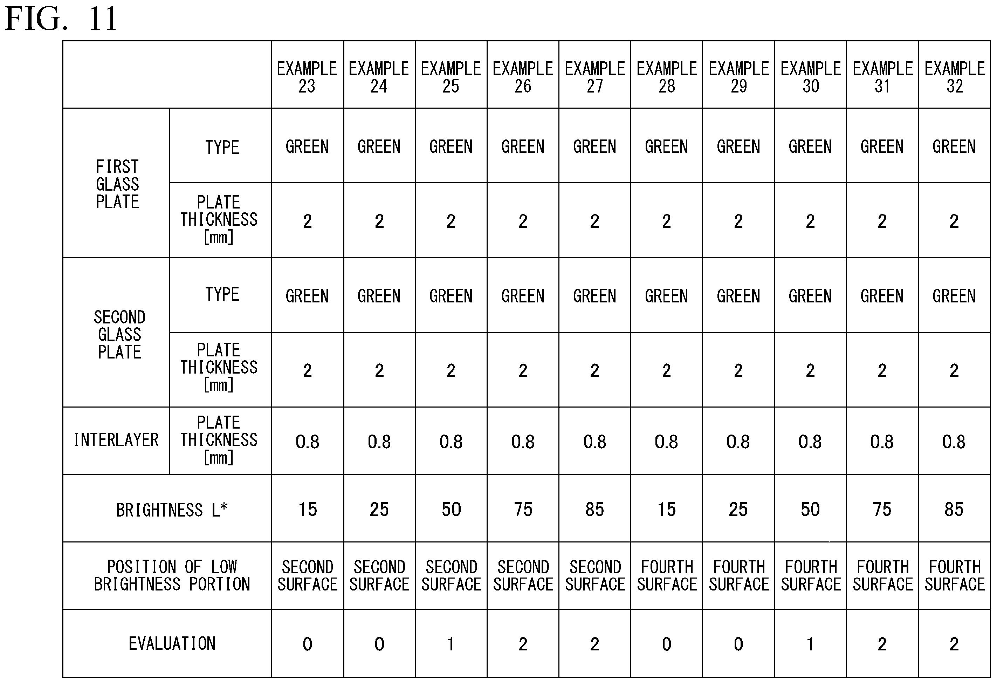

FIG. 11 shows the evaluation results of Examples 23 to 32. Also, in FIG. 11, visibility of the low brightness portion was set to 0 if the presence of the low brightness portion was less likely to be noticed even in the case of external light with an vehicle exterior illuminance of 1,000 lx or more. In addition, the visibility of the low brightness portion was set to 1 if the presence of the low brightness portion was easily noticed in the case of external light with an vehicle exterior illuminance of 1,000 lx or more, but was less likely to be noticed in the case of external light with an vehicle exterior illuminance of 100 lx or more and less than 1,000 lx. Further, the visibility was set to 2 if the presence of the low brightness portion was easily noticed in the case of external light with an vehicle exterior illuminance of 100 lx or more, but was less likely to be noticed in the case of external light with an vehicle exterior illuminance of less than 100 lx.

In FIG. 11, comparing Examples 23 to 27 with Examples 28 to 32, it has been found that, if the brightness L* value of the low brightness portion is the same, whether the low brightness portion is provided on the second surface or the fourth surface does not affect the visibility of the low brightness portion from the outside of the vehicle.

Also, from FIG. 11, it has been found that, if the brightness L* value of the low brightness portion is 50 or less, the presence of the low brightness portion is less likely to be noticed even in the case of external light with an vehicle exterior illuminance of 100 lx or more and less than 1,000 lx, which is preferable in terms of good visibility from the outside of the vehicle. Further, it has been found that, if the brightness L* value of the low brightness portion is 25 or less, the presence of the low brightness portion is less likely to be noticed even in a situation in which external light is strong, with an vehicle exterior illuminance of 1,000 lx or more, which is more preferable in that the visibility from the outside of the vehicle is further improved.

Although the preferred embodiments and the like have been described in detail above, the present invention is not limited to the above-mentioned embodiments and the like, and various modifications and substitutions can be made to the above-mentioned embodiments and the like without departing from the scope described in the claims.

This international application claims priority based on Japanese Patent Application No. 2022-203626 filed on December 20, 2022, and the entire content of Japanese Patent Application No. 2022-203626 is incorporated by reference into this international application.

### REFERENCE SIGNS LIST

10 Laminated glass
10t Upper side
10b Lower side
11 First glass plate
11a First surface
11b Second surface
12 Second glass plate
12c Third surface
12d Fourth surface
13 Interlayer
14 Shielding layer
15 Information transmission and reception region
16 Opening portion
17 Light shielding portion
17d First dot
17a First region
17b Second region
18 Low brightness portion
18d Second dot

## Claims

1. A laminated glass comprising:
a first glass plate having a first surface and a second surface;
a second glass plate having a third surface and a fourth surface; and
an Interlayer sandwiched between the second surface of the first glass plate and the third surface of the second glass plate,
wherein the fourth surface has a light shielding portion and an opening portion,
and
a difference in visible light transmittance between the light shielding portion and the opening portion is 70% or more.

2. The laminated glass according to claim 1, wherein the light shielding portion is configured of a dot pattern in which a plurality of first dots are disposed apart from one another.

3. The laminated glass according to claim 2, wherein an area of each of the first dots is 0.007 mm² or more and 0.8 mm² or less.

4. The laminated glass according to claim 2, wherein the plurality of first dots have the same density in a first region, and in a second region adjacent to the first region, the density is adjusted to be sparser toward a side farther from the first region.

5. The laminated glass according to claim 2,
wherein a brightness L* value of the light shielding portion is 50 or more,
a low brightness portion having a brightness L* value of 30 or less is provided on the first glass plate side of the light shielding portion,
the low brightness portion is configured of a dot pattern in which a plurality of second dots are disposed apart from one another, and
each of the second dots is disposed at positions that overlap each of the first dots in a plan view.

6. The laminated glass according to claim 5, wherein an area of each of the first dots is equal to or less than an area of each of the second dots overlapping in a plan view.

7. The laminated glass according to claim 6, wherein the area of each of the first dots is 0.8 times or more the area of each of the second dots overlapping in a plan view.

8. The laminated glass according to claim 5,
wherein each of the second dots is provided on the fourth surface,
each of the first dots is laminated on a side of each of the second dots opposite the fourth surface, and
each of the first dots and each of the second dots is formed of inorganic ink.

9. The laminated glass according to claim 5,
wherein each of the second dots is provided on the fourth surface,
each of the first dots is laminated on a side of each of the second dots opposite the fourth surface,
each of the first dots is formed of organic ink, and
each of the second dots is formed of inorganic ink.

10. The laminated glass according to any one of claims 1 to 9,
wherein a region in which the light shielding portion is disposed is a light irradiation region in which the laminated glass is irradiated with light, and
a ratio of an area of the light shielding portion to the total area of the opening portion and the light shielding portion located in the light irradiation region in a plan view is 13% or more and 50% or less.

11. The laminated glass according to any one of claims 1 to 9,
wherein in a direction parallel to a straight line passing through a point dividing an upper side of the fourth surface in half and a point dividing a lower side thereof in half in a plan view,
when the maximum length of the opening portion is defined as L1 and a length from an end portion of the opening portion on the lower side to an end portion of the light shielding portion on the upper side is defined as L2, the length L2 is 1/3 or less of the length L1.

12. The laminated glass according to any one of claims 1 to 9, wherein the opening portion has a visible light transmittance of 80% or more.

13. The laminated glass according to any one of claims 1 to 9, wherein the first glass plate and/or the second glass plate has a visible light transmittance of 90% or more.

14. The laminated glass according to any one of claims 1 to 9, wherein a plate thickness of the second glass plate is 1.8 mm or less.
